(19) Europäisches Patentamt

European Patent Office

Office européen des brevets

(11) **EP 2 616 791 B1**

(12) **EUROPEAN PATENT SPECIFICATION**

(45) Date of publication and mention
of the grant of the patent:
**25.02.2015 Bulletin 2015/09**

(21) Application number: **11775920.9**

(22) Date of filing: **19.09.2011**

(51) Int Cl.:
***G01M 13/04*** (2006.01)

(86) International application number:
**PCT/EP2011/066245**

(87) International publication number:
**WO 2012/035169 (22.03.2012 Gazette 2012/12)**

(54) **ARRANGEMENT AND METHOD FOR DETERMINING PROPERTIES OF A BEARING.**

ANORDNUNG UND VERFAHREN ZUR BESTIMMUNG DER EIGENSCHAFTEN EINES LAGERS.

DISPOSITIF ET PROCÉDÉ PERMETTANT DE DÉTERMINER DES PROPRIÉTÉS D'UN ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2010 EP 10177499**

(43) Date of publication of application:
**24.07.2013 Bulletin 2013/30**

(73) Proprietor: **Bestsens AG**
**96450 Coburg (DE)**

(72) Inventors:
• **LINDNER, Gerhard**
**96450 Coburg (DE)**
• **SCHMITT, Martin**
**96450 Coburg (DE)**
• **SCHLEMMER, Josefine**
**96486 Lautertal (DE)**
• **KREMPEL, Sandro**
**96515 Sonneberg (DE)**
• **FAUSTMANN, Hendrik**
**96450 Coburg (DE)**
• **BRÜCKNER, Christoph**
**96126 Altenstein (DE)**
• **DILLER, Wolfgang**
**96450 Coburg (DE)**
• **MEISENBACH, Lars**
**96450 Coburg (DE)**
• **STICH, Sebastian**
**96450 Coburg (DE)**

(74) Representative: **Staroske, Sandro et al**
**Patentanwälte**
**Maikowski & Ninnemann**
**Postfach 15 09 20**
**10671 Berlin (DE)**

(56) References cited:
**EP-A1- 1 598 569     EP-A1- 1 731 893**

## Description

The invention relates to a bearing according to claim 1, a bearing according to claim 17, an arrangement for determining properties of a bearing according to claim 18 and a method for determining properties of a bearing according to claim 20.

Bearings (for example, friction type or rolling element bearings) usually contain a lubricant (e.g. oil) for controlling the friction between the movable parts of the bearing. The monitoring of the properties (such as the quantity or the viscosity) of the lubricant in a bearing is important in order to be able to assure a reliable operation of the bearing. For example, optical and ultra sonic methods are known for lubricant monitoring.

It is an object of the invention to provide a possibility for monitoring properties of a bearing, in particular of a lubricant in a bearing, as reliable as possible.

According to the invention, a bearing is provided, comprising:

- a first and a second bearing element that are movable relative to one another;
- at least one receiver for receiving acoustic waves excited in the first and/or second bearing element, the receiver being arranged on the first or the second bearing element, wherein information related to properties of the bearing can be determined using a signal generated by the receiver upon receipt of acoustic waves in the first and/or second bearing element.

For example, a lubricant arranged between the first and the second bearing element for reducing the friction between the first and the second bearing element and properties of the bearing are determined using the receiver signal. Further, at least one transmitter for exciting acoustic waves in the first or the second bearing element may be arranged on the first or the second bearing element, wherein the receiver receives acoustic waves evoked by the transmitter, wherein information related to properties of the lubricant can be determined using a signal generated by the receiver upon receipt of acoustic waves evoked by the transmitter.

In particular, the transmitter is configured to excite surface acoustic waves in the first or the second bearing element. Especially, concurrent acoustic waves in the form of Lamb or Lamb-Rayleigh waves are generated travelling from the transmitter to the receiver in the first or the second bearing element.

If a lubricant is present on a surface of the first or second bearing element at least a part of the acoustic waves propagating in the bearing element will be converted into acoustic waves in the lubricant provided that the acoustic waves excited in the first or second bearing element comprise displacements at the surface of the substrate that have a non-vanishing sagittal component (which is fulfilled by Lamb- or Rayleigh-Waves) and provided that the velocity of sound in the lubricant is smaller than the wave velocity in/on the first or second bearing element, which is true for common lubricants (e.g. oil) and common materials of bearing elements (e.g. metal). Further, the frequency of the waves must be chosen appropriately as will be discussed below.

Therefore, the presence of the lubricant (e.g. a lubricant film) on a surface of the bearing element in which acoustic waves are excited will cause a change of the acoustic waves arriving at the receiver and thus a change of the (electrical) signal generated by the receiver upon receipt of the waves. For example, the amplitude of the receiver signal will decrease depending on the amount of lubricant (e.g. the thickness of a lubricant film) present on an inner surface of the bearing element. Also, variations of other properties of the lubricant (such as its temperature or composition) will result in a change of the receiver signal. Thus, by detecting and evaluating the acoustic waves travelling in the first or second bearing element information about some important lubricant properties can be derived.

EP-1598569 shows a condition-detecting device for detecting an operating condition of a linear rolling motion guide apparatus

According to an embodiment of the invention, the transmitter is arranged at (on or in) the first bearing element and the receiver is arranged at the second bearing element. Especially, the transmitter is arranged on a surface of the first bearing element and the second bearing element is arranged on a surface of the second bearing element. However, e.g. depending on the type of the bearing, the transmitter and the receiver can also be arranged at the same bearing element, i.e. both the transmitter and the receiver are arranged either on the first or the second bearing element.

In order to excite surface acoustic waves in the form of Lamb waves, Lamb-Rayleigh or Rayleigh waves, the frequency of the excited waves in the bearing element is adapted to the thickness of the bearing element such that concurrent surface acoustic waves are excited that propagate on both a first side and a second (opposite) side of the bearing element, wherein the first side is an inner side being in contact with the lubricant and the second side is an outer side of bearing element.

In the case of Lamb waves or Lamb-Rayleigh-waves the displacement of opposite surfaces of the bearing element excited by the transmitter is correlated such that, in particular, the amplitude and/or the phases of the displacement movement of the inner and outer surfaces of the bearing element are interrelated. For example, the acoustic waves excited in the bearing element will be mainly or only of the Lamb wave type if the thickness of the bearing is substantially smaller (e.g. at least five times smaller) than the wavelength of the excited acoustic waves. The frequency of the excited acoustic waves thus has to be chosen depending on the thickness of the bearing element and taking into account the dispersion relation of the Lamb waves.

However, as set forth above, e.g. also a transition type of Lamb waves and Rayleigh waves can be used, i.e. the thickness (the distance between the outer and the inner side) of the bearing element can be of the same order of magnitude as the wavelength of the excited acoustic waves. In that case, there can still be a correlation between the displacement movement of the opposite surfaces of the bearing element. For example, the thickness of the bearing element is in the range between 0.1 mm to 5 mm. The excitation frequency may be chosen to be in the range between 500 kHz and 2 MHz, in particular between 800 kHz and 1.5 MHz.

The transmitter and/or the receiver may be interdigital piezo-electric transducers. It is noted, however, that the term "transmitter" is not restricted to a piezo-electric transducer. Other embodiments of the invention comprise a transmitter in the form of a (e.g. pulsed) laser that excites the acoustic waves in the substrate based on thermoelastic effects. Also, a wedge ("wedge converter") could be used to excite the acoustic waves or a comb-like vibrator ("comb converter"), wherein the wedge converter and/or the comb converter may be used in combination with a piezo-electric transducer. Of course, different transmitter types could also be used in combination. Also, the receiver does not necessarily have to be an interdigital piezo-electric transducer either. For example, a receiver in the form of an optical displacement detector such as an interferometer or a laser Doppler-vibrometer could be used.

For example, the bearing is a friction type bearing such that a surface of the first bearing element can slide over a surface of the second bearing element, wherein the friction between the two surfaces is reduced by the lubricant. The first and/or the second bearing element can be connected to further parts.

In another embodiment, the bearing is a rolling element, wherein that at least one rolling element is arranged between the first and the second bearing element. For example, the rolling element is a ball (ball bearing) or a cylinder (roller bearing).

In particular, both the transmitter and the receiver are arranged on an outer side, i.e. on a side of the first or the second element that faces away from the rolling element. For example, the rolling element bearing is an axial bearing, the first bearing element forming an outer ring and the second bearing element forming an inner ring of the bearing. The inner ring, for example, is configured to receive a shaft. It is, however, also conceivable that the second bearing element itself is a machine part (e.g. a shaft) that is mounted on the first bearing element. Thus, it is possible to determine properties of the lubricant only by arranging the transmitter and the receiver on an outer surface of the bearing without having to arrange a sensor within the bearing interior. It is noted that, of course, the invention could also be used with a linear rolling element bearing.

According to another variant of the invention, the transmitter and the receiver are arranged on an outer surface of the outer ring of the bearing. In particular, the transmitter is arranged and configured in such a way that first acoustic waves are excited travelling along the outer ring in clockwise direction and second acoustic waves travelling along the outer ring in anti-clockwise direction.

For example, the receiver is arranged and configured in such a way that the path length between the transmitter and the receiver in clockwise direction is different from the path length between the transmitter and the receiver in anti-clockwise direction. In this way, a single transmission signal creates two easily distinguishable signals at the receiver. These two signals equally depend on external parameters (such as, for example, the temperature of the surroundings of the bearing) but correspond to different paths length of the interaction between the acoustic waves and the lubricant and/or the rolling elements of the bearing. Therefore, using the difference of these two signals, it is possible to eliminate the influence of external parameters. It is noted that also for a linear bearing this principle could be used, for example by using two receivers that are positioned at different distances from the transmitter.

The bearing may also comprise evaluating means configured for determining information related to properties of the lubricant using a signal generated by the receiver upon receipt of acoustic waves evoked by the transmitter. In particular, the evaluation means are configured to evaluate a first signal generated by the receiver evoked by the first acoustic waves and a second signal generated by the receiver evoked by the second acoustic waves and to use a difference between the first and the second signal for determining the information related to properties of the lubricant.

Evaluating the receiver signal can comprise evaluating the amplitude and the time response (transmission time) of the signal. As set forth above, the presence of a lubricant on a bearing surface will cause some of the acoustic wave energy in the bearing element to be converted into wave energy in the lubricant such that the amplitude of the acoustic wave arriving at the receiver will be smaller if a lubricant is present compared to a bearing without lubricant.

As to evaluating the transmission time of the receiver signal, the transmitter, for example, excites pulsed acoustic waves in the bearing element which have a certain propagation time (the "transmission time") from the transmitter to the receiver (depending on the path they take between the transmitter and the receiver). Modifications of the interface between the inner surface of the bearing element and the interior of the bearing will influence the transmission time (i.e. the time a wave front or an acoustic pulse needs to run from the transmitter to the receiver) of the acoustic waves in the bearing. Thus, evaluating changes of the transmission time may contribute to the determination of properties of a lubricant in the bearing.

The evaluation means may be realised as a programmed electronic circuit or a software running on a programmable device.

According to another aspect of the invention, a bearing, in particular as described above, is provided, comprising:

- a first and a second bearing element that are movable relative to one another;
- a lubricant arranged between the first and the second bearing element for reducing the friction between the first and the second bearing element;
- means for exciting acoustic waves in the first or the second bearing element;
- means for receiving acoustic waves evoked in the first or the second bearing element, wherein information related to properties of the lubricant can be determined using a signal generated by the means for receiving acoustic upon receipt of acoustic waves, wherein
- the means for exciting the acoustic waves and the means for receiving the acoustic waves are configured in such a way that first acoustic waves travelling along a first path before being received by the receiving means and second acoustic waves travelling along a second path before being received by the receiving means, wherein the path lengths of the first and the second paths are different.

For example, the means for exciting acoustic waves in the first or the second bearing element comprise at least one transmitter and the means for receiving acoustic waves comprise at least on receiver, wherein possible configuration of the transmitter, the receiver and the bearing elements have been discussed above. For example, at least one of the bearing elements is ring shaped and both the transmitter and the receiver are arranged at this ring shaped bearing element. It is also conceivable that the receiving means comprise two receivers wherein the different path lengths are realized by the distance between the transmitter and the first and the second receiver, respectively.

The invention also relates to an arrangement for determining properties of a bearing, in particular properties of a lubricant of the bearing, the bearing having a first and a second bearing element, comprising:

- at least one transmitter for exciting acoustic waves in the first and/or the second bearing element;
- at least one receiver for receiving acoustic waves evoked by the transmitter, wherein properties of the lubricant can be determined using a signal generated by the receiver upon receipt of acoustic waves evoked by the transmitter;
- attachment means for attaching the transmitter and the receiver to the first or second bearing element.

The attachment means may allow a detachable connection of the transmitter and/or receiver to the bearing elements. For example, the attachment means comprise latching elements. In particular, the attachment means allow the transmitter and/or receiver to be arranged in a way as described above.

The arrangement according to the invention may further comprise evaluating means configured for determining information related to properties of the lubricant using a signal generated by the receiver upon receipt of acoustic waves evoked by the transmitter. In particular, the evaluating means are configured as set forth above.

The invention also comprises a method for determining properties of a bearing (for example, properties of a lubricant of the bearing), the method comprising the steps of:

a) providing a bearing having a first and a second bearing element that are movable relative to one another;
b) exciting acoustic waves (especially surface acoustic waves, for example, Lamb waves as set forth above) in the first and/or the second bearing element (for example, using a transmitter that is, e.g., arranged at the first or the second bearing element);
c) arranging at least one receiver and receiving acoustic waves in the first and/or the second bearing element (for example, evoked by the transmitter) using the receiver;
d) determining information related to properties of the bearing by evaluating a signal generated by the receiver upon receipt of acoustic waves in the first and/or the second bearing element (e.g. evoked by the transmitter).

For example, a reference value of the signal amplitude is determined for the bearing without the lubricant and evaluating the signal comprises determining the difference between the reference value and the amplitude (or the phase or the propagation time) of the received signal. A signal (alarm signal) may be generated if the difference drops below a predetermined value. Also, it is possible that a calibration is carried out. For example, amplitude values are determined for a plurality of different lubricant quantities (i.e. bearing fillings) as explained in more detail below.

Determining information related to properties can comprise determining a thickness of a lubricant layer on a surface of the first and/or the second bearing element. In particular, a calibration is carried out in order to be able to determine absolute values of the thickness. For example, the bearing is a friction bearing, wherein the bearing can be considered to realize a three-layer system (comprising the two bearing elements and a lubricant film in between). Using the receiver signal (for example, its amplitude, transmission time and/or phase) and an appropriate three-layer model of the bearing, the thickness and/or other properties of the lubricant film can be determined. Further, the receiver signal can be monitored over time such that changes of the thickness of the lubricant film (and/or other properties of the film) can be detected. It is also possible (alternatively or in addition) that the thickness of the lubricant film is determined using the attenuation of the acoustic waves over the transmission path, only. For example, the amplitude of the waves directly behind the transmitter is compared to the amplitude at the receiver (the amplitude at the receiver being determined using the receiver signal). Further, impurities in the bearing (e.g. of the lubricant) can be determined as the acoustic waves may be reflected at polluting particles.

If the bearing comprises a static first bearing element and a moving second bearing element (such as in a friction or a roller bearing), acoustic waves excited in the static bearing element may excite acoustic waves in the moving bearing element such that the received frequency of the waves may vary because of the Doppler effect. This effect could be used to determine the velocity of the moving bearing element.

According to another embodiment of the invention, the receiver signal is evaluated in such a way that defects of the bearing, in particular a defect (such as a fissure or structural changes) in the first and/or second bearing element, are identified. In contrast to volume acoustic waves the use of surface acoustic waves allows to detect smaller defects in the bearing elements (for example, in a bearing ring of a roller bearing) before a serious damage develops such that a failure of a device comprising the bearing may be avoided.

The detection of the defects is based on the fact that the (surface) acoustic waves are at least partially reflected at the defect, wherein by using different acoustic waves of different wavelengths the size (e.g. the depth) of the defect may be determined as the different acoustic waves possess different penetration depths. Further, based on the size and the number of the defects the expected lifetime of the bearing or the probability of failure may be calculated. Also, if acoustic waves having different wavelength are excited in the bearing (by setting the excitation frequency accordingly), the waves will be modified differently upon interaction with the defect.

For example, the propagation time of the waves will be changed differently (dispersion). Changes of the dispersion behaviour may be monitored over time (e.g. whether the signal evolves into a Dirac impulse like curve). More over, a change over time of an envelope of the receiver signal may be evaluated in order to identify defects of the bearing.

Further more, the excited acoustic waves may comprise a single mode (for example, a symmetric mode) only, wherein a defect is indicated if, following the evaluation in step d), a multi mode wave or or a wave comprising a different mode (for example, an anti-symmetric mode) is received by the receiver. The acoustic waves may interact with the defect, wherein an originally monomode wave may be become a multi-mode wave upon interacting with the defect region of the bearing.

For example, the phase shift and/or the amplitude change of the receiver signal are used to obtain information on a lubricant of the roller bearing (e.g. in comparison with a reference value, which is e.g. measured at the beginning of the transmission path). A continuous transmitter signal may be applied to the transmitter to create continuous acoustic waves, wherein the transmitter signal may modulated to facilitate the evaluation of the receiver signal.

It is also possible to carry out a frequency analysis of the receiver signal in order to gather information on a lubricant of the bearing and/or mechanical properties of the bearing. More particularly, changes of the frequency spectrum (such as a shift of a main peak) may be monitored. Also, a change of an envelope of the receiver signal (generated e.g. by applying a Hilbert transformation on the reveiver signal) may be monitored.

It is also conceivable that, if the transmitter and/or the receiver are interdigital transducers, a capacitive signal of the piezoelectric material used in the transducers is determined, wherein the capacitive signal may be used as reference value. Further, the relationship of different acoustic modes (e.g. symmetric or anti-symmetric modes) could be evaluated (e.g. their amplitude relation at the beginning of the transmission path may be compared to the situation at the receiver).

It is further noted that apart from Lamb waves other types of surface acoustic waves could be used to excite the acoustic waves in the first and/or second bearing element. For example, in larger bearings, Rayleigh waves could be excited (e.g. on the inner side of the first and/or the second bearing element, the inner side facing towards the respective other bearing element.

Also, the bearing can be a rolling element bearing (as describe above) such that a periodic receiver signal is generated when the bearing is operated, wherein the method comprises the steps of:

- registering the periodic receiver signal by the receiver;
- evaluating the periodic receiver signal by determining an average amplitude and/or an average transmission time of the signal; and
- determining the amount of lubricant present in the bearing using the determined average amplitude and/or an average transmission time of the signal.

Thus, in particular after a suited calibration of the bearing, the amount of lubricant in the bearing can be determined using the receiver signal. It is also possible to use minimum amplitude or transmission time values in addition or instead of the average amplitude or transmission time. Further, the average of the periodic changes of the amplitude or the transmission time could be used.

It is also possible that a velocity of the rolling elements and/or the velocity of a receptacle (cage) in which the rolling elements are arranged is determined by evaluating the receiver signal. In operation of the roller bearing, the receiver signal (e.g. its amplitude and the propagation time) will be modulated periodically due to the rotation of the bearing elements. Using the period of this modulation (having frequency $f_{mod}$), the dimensions of the bearing elements and the number $n_{re}$ of the rolling elements, the cage velocity $v_{cage}$ can be calculated. For example, the angular velocity $\omega_{cage}$ of the cage is calculated according to:

$$\omega_{cage} = 2\pi \frac{f_{mod}}{n_{re}}$$

Correspondingly, the track velocity $v_{cage}$ of the inner portion of the bearing cage is $v_{cage} = \omega_{cage} \cdot r_{cage}$ ($r_{cage}$: inner radius of the bearing cage).

Moreover, the determined velocity (e.g. the cage velocity) may be compared to corresponding velocities measured by a separate velocity detector (e.g. a revolution counter) in order to determine a slip of the bearing.

It is noted that the transmitter may be operated in such a way that pulsed acoustic waves are generated in the bearing elements. However, as mentioned above, it is also possible to excite continuous acoustic waves, which may have the effect that the sampling rate is not limited (using pulsed waves, the sampling rate is limited due to the propagation time of the pulses and the time interval between the pulses). For example, revolution frequencies above 150.000 revolutions/minute could be measured.

As set forth above, by evaluating the receiver signal the amount of lubricant present in the roller bearing may be determined. The determined lubricant amount and a determined velocity of the bearing elements and/or a bearing cage (see above) can be used to determine the thickness of a lubricant film between the rolling elements and the first and/or second bearing element. The calculation of the lubricant film thickness is, in principle, known in the art and described, for example, in "Rolling Bearing Analysis, 4th Edition, Tedric A. Harris, John Wiley & Sons Canada, Ltd.; 4th Edition edition (Dec 15 2000)", which is enclosed by reference herewith.

In order to focus the investigation on the lubricant film and to suppress other effects on the acoustic waves, a short and/or small transmission path between the transmitter and the receiver may be created. For this, the transmission path may be orientated perpendicular to the direction of motion of the rolling elements. For example, the transmitter is arranged on an outer side of the first bearing element and the receiver is arranged on an inner side of the first bearing element (outer ring of the roller bearing), the inner side facing towards the first bearing element. Of course, it is also possible that both the transmitter and the receiver are arranged on the same side of the second bearing element (or on the first bearing element), for example, on its outer side.

The width (measured perpendicular to the propagation direction of the acoustic waves) of the transmission path depends on the corresponding width of the transmitter (and/or receiver). For example, the receiver has a width measured in a direction perpendicular with respect to a connecting line between the transmitter and the receiver (i.e. the propagation path) that is chosen dependent on the diameter of the rolling element. For example, the receiver width is smaller than the diameter of the rolling element or it is smaller than the radius or one tenth of the diameter of the rolling element. In another example, the width of the receiver does not exceed 5 mm or it does not exceed 1 mm.

The arrangement comprising the rolling elements, the lubricant film and the outer ring (the second bearing element) may be regarded as a three-phase system (see above), wherein using the receiver signal, the film thickness may be determined using an adequate three-phase model.

It is, of course, also possible to use more than one transmission path (by arranging more than one transmitter and/or receiver) in order to investigate different sections of the lubricant film. This variant may especially be used in connection with rolling elements that have a more complicated geometry.

According to another variant of the invention, the transmitter and the receiver are arranged on the same bearing element, wherein a load on this bearing element is determined by evaluating the absolute amplitude of the receiver signal. For example, pulsed acoustic waves are excited in the bearing element, wherein, e.g., especially the amplitude of the received first pulse (or pulse group) is influenced by the applied load. Further, two different transmission paths could be used, wherein the receiver signals (e.g. their amplitudes) assigned to the different transmission paths are compared. In particular, one of the transmission paths does not depend on the load such that the receiver signal assigned to this transmission path can be used as a reference signal.

It is also possible that no transmitter is used, wherein the acoustic waves in the first and/or second bearing element are generated by applying a load on the bearing element. In particular, during operation of a roller bearing the rolling elements will be periodically compressed and expanded, wherein the periodic compression and expansion of the rolling elements may excite acoustic waves in the first and/or second bearing element. In another configuration of a roller bearing a first receiver is present on the first (inner) bearing element and a second receiver is arranged on the second (outer) bearing element such that acoustic waves excited in the second (or similarly in the first) bearing element will be transmitted towards the first bearing element by the rolling elements. The transmission of the waves via the rolling elements depends on the load acting on them such that by evaluation of the receiver signals the load on the rolling elements could be determined.

Further, if the transmitter and/or the receiver comprise a piezoelectric transducer, the temperature of the bearing could be measured by measuring the impedance of the piezoelectric transducer (after calibrating the measurement). The bearing temperature could also be measured by comparing properties (such as amplitude and/or transmission time) of the receiver signal assigned to different acoustic modes. For example, a reference transmission path is used.

In another embodiment, a wide band receiver is used such that volume acoustic waves may be registered and frequency spectra of the volume acoustic waves may be generated.

The possible arrangement and operation of the transmitter and the receiver has been described above.

The embodiments of the invention will be described in more detail hereinafter with reference to the drawings, in which:

Figure 1      illustrates a bearing according to a first embodiment of the invention;

Figure 2A      illustrates a receiver signal obtained with the bearing arrangement of Figure 1;

Figure 2B      illustrates receiver signal amplitudes for different lubricant situations with respect to the bearing arrangement of Fig. 1;

Figure 3A      shows a top view of a bearing according to a second embodiment of the invention;

Figure 3B      shows a modification of the bearing illustrated in Fig. 3A;

Figure 4      shows an enlarged detail of Figure 2;

Figure 5A      shows a top view of a bearing according to a third embodiment of the invention;

Figure 5B      shows a side view of the arrangement of Figures 5A and 5B;

Figure 6      illustrates a receiver signal generated using the arrangement of Figures 5A and 5B;

Figures 7A, 7B      illustrate the amplitude and the transmission time for different bearing positions;

Figures 8A, 8B      show a side view of the arrangement of Figure 5A and 5B in different positions;

Figures 9A, 9B      show the average amplitude and the average transmission time of a rotated bearing with respect to the lubricant volume; and

Figures 10A, 10B      show the standard deviation of the amplitude and of the average transmission time of the rotated bearing with respect to the lubricant volume.

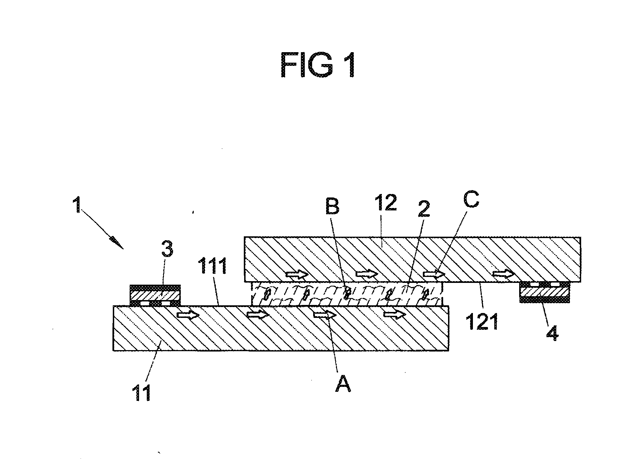

Figure 1 shows a bearing 1 in the form of a friction type bearing (plane bearing), which comprises a first bearing element in the form of a cuboid body 11 and a second cuboid body 12. The two bodies 11, 12 can be moved relative to one another, wherein a surface 111 of the first body 11 can slide over a surface 121 of the second body 12. The surfaces face each other and extend essentially parallel. The first and/or the second body can be connected to further parts (not shown) which shall be moved relative to one another.

Between the surfaces 111, 121 a lubricant 2 is arranged for reducing the friction between the two bodies 11, 12 (i.e. between the surfaces 111, 121 of the bodies). In order to be able to determine some of the properties of the lubricant surface acoustic waves A are excited on the first body 11. For this, a transmitter 3 is arranged on the surface 111 of the first body 11, wherein the transmitter 3 is positioned outside the overlapping region between the first and the second body 11, 12 (i.e. in a distance to the lubricant 2). Further, a receiver 4 is arranged on the surface 121 of the second body 12.

The acoustic waves A initially travel along the first body 11. However, in the region of lubricant 2 at least a part of the acoustic waves A are converted into sound waves B in the lubricant 2 due to mode convertion effects described above. The converted waves propagate in the lubricant towards the second body 12 where a part of the waves is reconverted into surface acoustic waves in the second body 12. These reconverted waves C travel along the second body 12 towards the receiver 4 where they are detected and an electrical signal is generated upon detection.

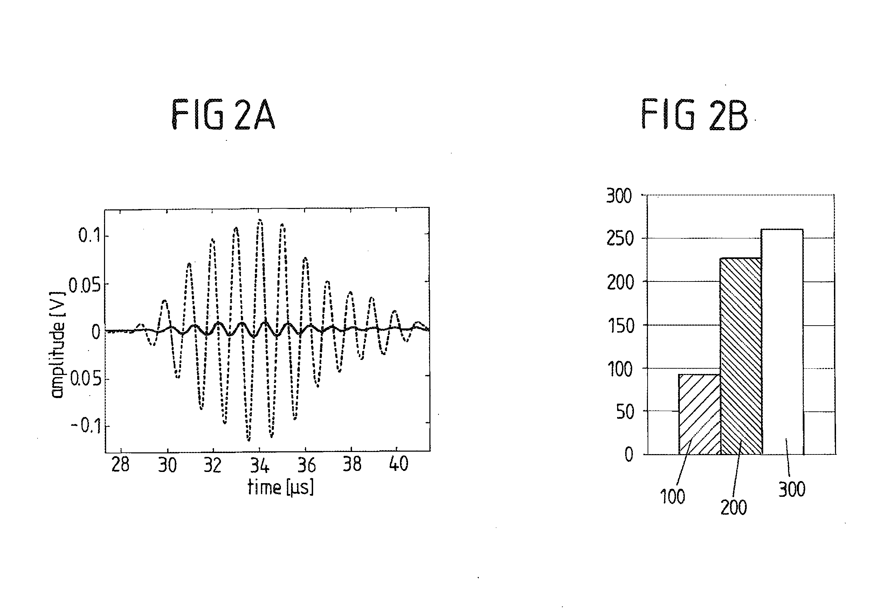

The properties of the electrical signal generated by the receiver 4 depend on the properties (amplitude, transmission time) of the acoustic waves C, which in turn depend on the mode convertion effect and thus on the properties of the lubricant 2 (for example, the volume of the lubricant present in the bearing). Therefore, evaluating the amplitude and time behaviour of the electrical signal generated by the receiver 4 allows the determination of information about the properties of the lubricant. Examples of receiver signals are shown in Figures 2A and 2B.

Figure 2A shows the receiver signal obtained in the friction bearing arrangement according to Figure 1. The amplitude of the signal drastically increases if a lubricant is present in the bearing (continuous line: bearing without lubricant, dashed line: with lubricant). This is due to the fact that a part of the acoustic waves in lower bearing body 1 couples via the lubricant 2 into the upper bearing body 2 such that it will be received by the receiver 4. Figure 2B illustrates the maximum amplitude of the receiver signal for the case that no lubricant is present (bar 100), oil is used as the lubricant (bar 200) and grease is used as lubricant (bar 300).

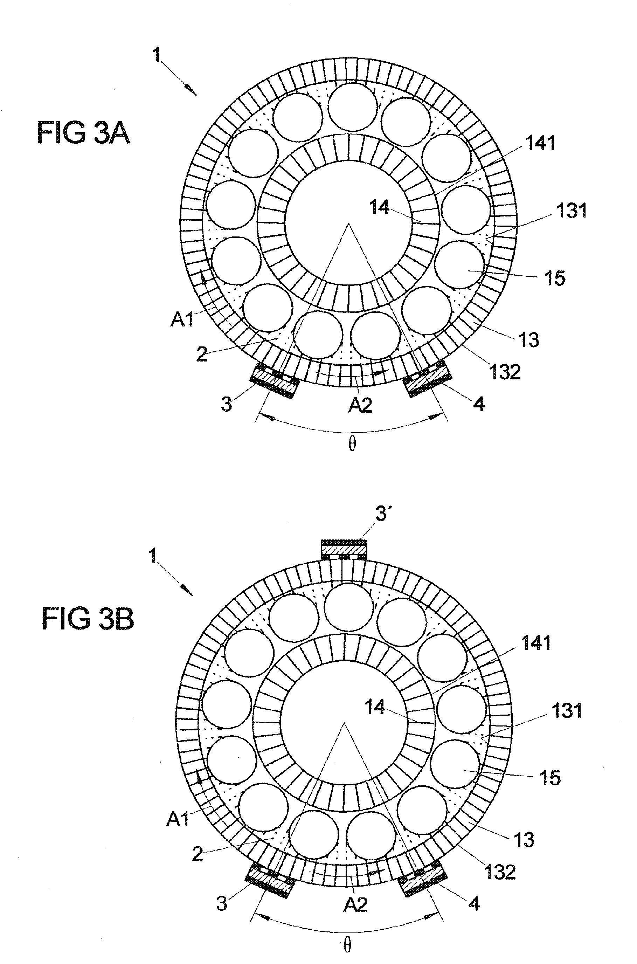

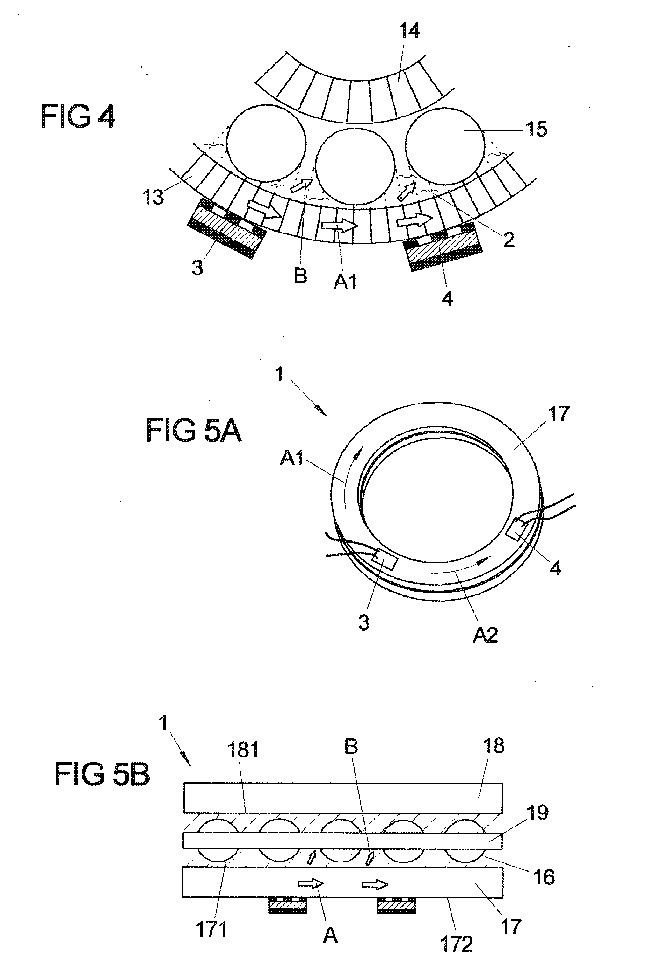

Figure 3A (top view) and Figure 4 (side view) relate to another embodiment of the invention, wherein the bearing 1 is a rolling element bearing in the form of a ball bearing.

The bearing 1 comprises a first bearing element in the form of an outer ring 13 and a second bearing element in the form of an inner ring 14 having a smaller diameter than the outer ring and being positioned within the outer ring. Between an inner surface 131 of the outer ring and an outer surface 141 (facing towards surface 131) of the inner ring 14 a plurality of rolling elements in the form of spheres 15 are arranged. Additionally, at least a part of the volume between the inner surface 131 and the surface 141 is filled with a lubricant 2.

In order to measure properties (e.g. the filling level) of the lubricant 2 an acoustic sensor arrangement is provided, the sensor arrangement comprising means for exciting acoustic waves in the bearing elements in the form of a transmitter 3 and means for receiving the acoustic waves in the form of a receiver 4. Both the transmitter 3 and the receiver 4 are arranged on an outer surface 132 of the outer ring 13, the outer surface facing away from the inner surface 131.

The transmitter 3 excites surface acoustic waves in the outer ring 13 which are detected by the receiver 4, wherein the amplitude and the time response of the receiver signal depend on the properties of the interface between the inner surface 131 of the outer ring 13 and its surroundings. In particular, the receiver signal depends on the presence and the properties of the lubricant as is it in contact with the inner surface 131 such that mode convertion of the surface acoustic waves generated in the outer ring will occur as set forth above and as illustrated in Figure 4. A part of the acoustic waves in the outer ring 13 is coupled into the lubricant 2 (arrows B) such that for example the amplitude of the receiver signal will drop depending, for example, on the amount of lubricant present between the rings 13 and 14.

The transmitter 3 is structured and arranged in such a way that first acoustic waves A1 that travel along the outer ring 13 in clockwise direction (with respect to the top view of the bearing) and second acoustic waves A2 are generated that travel along the outer ring 13 in anti-clockwise direction. Further, the transmitter 3 is arranged relative to the receiver 4 in such way that the path length between the transmitter and the receiver in clockwise direction is longer than the path length between the transmitter and the receiver in anti-clockwise direction. Thus, two well distinguishable signals will be generated by the receiver upon receipt of the first and the second acoustic waves, wherein external distortions could be eliminated or at least reduced by using a differential signal, i.e. by subtracting the signal corresponding to the second acoustic waves from the signal corresponding to the first acoustic waves or vice versa.

For example, the transmitter and the receiver are separated by an angle θ of 30°. Of course, other angles are possible.

As depicted in Figure 3B, a further transmitter-receiver-transducer 3' is arranged on the outer ring 13. Transducer 3' may be of the same type (interdigital transducer) as transmitter 3 and receiver 4, wherein it may be operated either as transmitter or as receiver. The additional transducer 3' permits to create different acoustic paths that may be evaluated separately to enhance the accuracy of the measurement. For example, the transducer 3' is operated as a receiver, wherein acoustic waves excited by the transmitter 3 are received and evaluated both at the transducer 3' and the receiver 4. It is of course also possible that the transducer 3' is a pure transmitter (or receiver). Further, more than one additional transducer can be provided.

Figures 5A (top view) and 5B (side view) are related to another embodiment of the invention, wherein the bearing is a rolling element bearing in the form of a cylinder roller bearing. This bearing comprises a plurality of rolling elements in the form of cylinders 16 arranged between a first bearing element in the form of a first ring 17 and a second bearing element in the form of a second ring 18, wherein the diameter of the first ring compares to the diameter of the second ring. Further, a cage 19 is provided for holding the cylinders 16. The axis of the cylinders 16 is orientated radially with respect to the rings 17, 18 such that the cylinders will roll between an inner surface 171 of the first ring and an inner surface 181 of the second ring 18, the surfaces 171 and 181 facing one another. Further, a lubricant 2 is present between the first and the second ring 17, 18.

A transmitter 3 and a receiver 4 are arranged on an outer side 172 of the first ring 17. Surface acoustic waves A are generated and detected using the transmitter 3 and the receiver 4 as set forth with respect to the other embodiments such that properties of the lubricant 2 can be detected even when the bearing 1 is in operation. In particular, the transmitter 3 and the receiver 4 are arranged similarly to Fig. 3 such that first and second acoustic waves A1, A2 are generated in the first ring 17 travelling in opposite directions and having different path lengths from the transmitter to the receiver. It is noted that of course more than one transmitter and/or more than one receiver could be used. For example, another receiver could be arranged on the first ring or on the second ring (similarly to Fig. 3B).

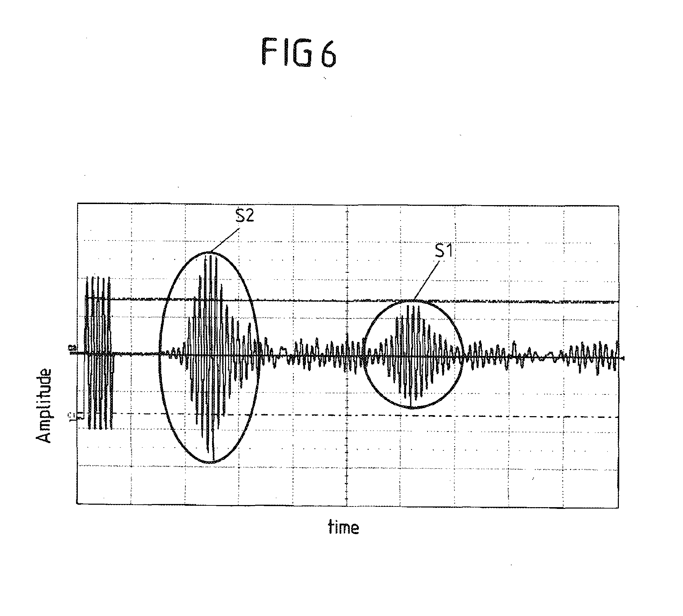

Because of this arrangement of the transmitter and the receiver two discernable signals will appear in the receiver signal as shown in Figure 6. The first signal (pulse) S2 corresponds to the second acoustic waves A2 travelling along the shorter path between the transmitter 3 and the receiver 4, wherein the later signal S1 corresponds to the first acoustic waves A1 propagating along the longer path.

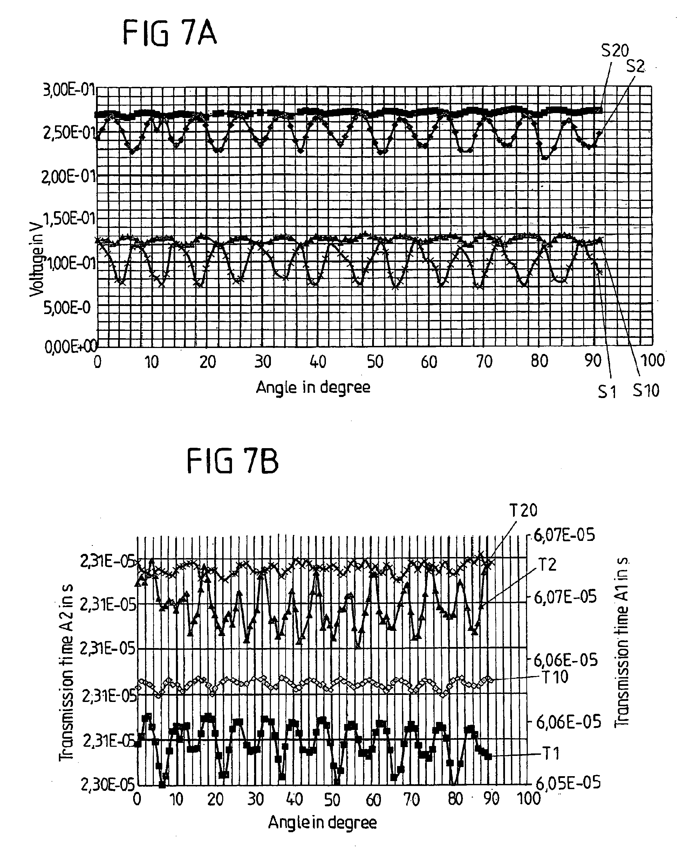

Figures 7A and 7B show a receiver signal (Fig. 7A: amplitude, Fig. 7B: transmission time) for a roller bearing arrangement as shown in Figures 5A, B in operation. Regarding Figure 7A, the upper curves S20 and S2 correspond to the second acoustic waves A2 (shorter path) and the lower curves S10 and S1 correspond to the first acoustic waves A1 (longer path). The curves S10 and S20 are reference curves measured with a bearing without lubricant whereas the curves S1 and S2 are measured after filling in an oil lubricant.

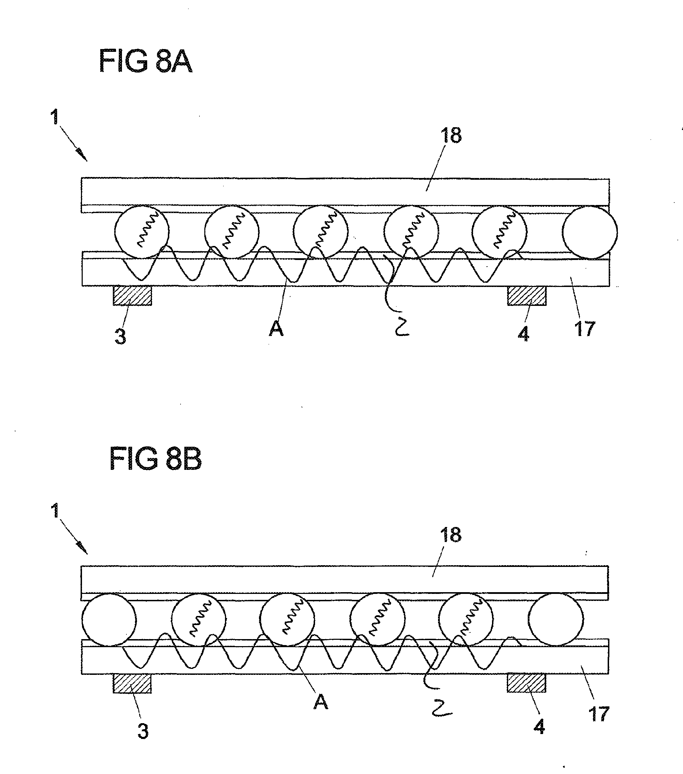

As can be seen, the amplitude of the signal varies periodically wherein the amplitude maximum gets close to the reference values. An explication for this behaviour is illustrated in Figures 8A and 8B, which show two different positions of the bearing. According to Figures 8A and 8B, the number of cylinders 16 present between the transmitter 3 and the receiver 4 will vary periodically during operation (rotation) of the bearing (Fig. 8A: five cylinders are positioned between the transmitter and the receiver, Fig. 8B: only four cylinders are present between the transmitter and the receiver). As the lubricant 2 is squeezed away by the rolling cylinders 16 (i.e. between the ring and the cylinder there is no or only a small lubricant film) the amount of lubricant that is in contact with the first bearing ring 17 will depend on the number of cylinders present between the transmitter and the receiver. This number, however, will vary periodically when the bearing is in operation.

The minimum amplitude values could be used to determine the amount of lubricant present in the bearing (in particular after a suited calibration). For example, if the difference between the reference line S10, S20 and the minimum amplitude values becomes too small an alarm signal could be triggered.

The corresponding transmission time signals T1, T10, T2, T20 (Fig. 7B), which similarly to the amplitude reflects the presence and the properties of the lubricant, shows a similar periodic dependency on the bearing position (rotation angle).

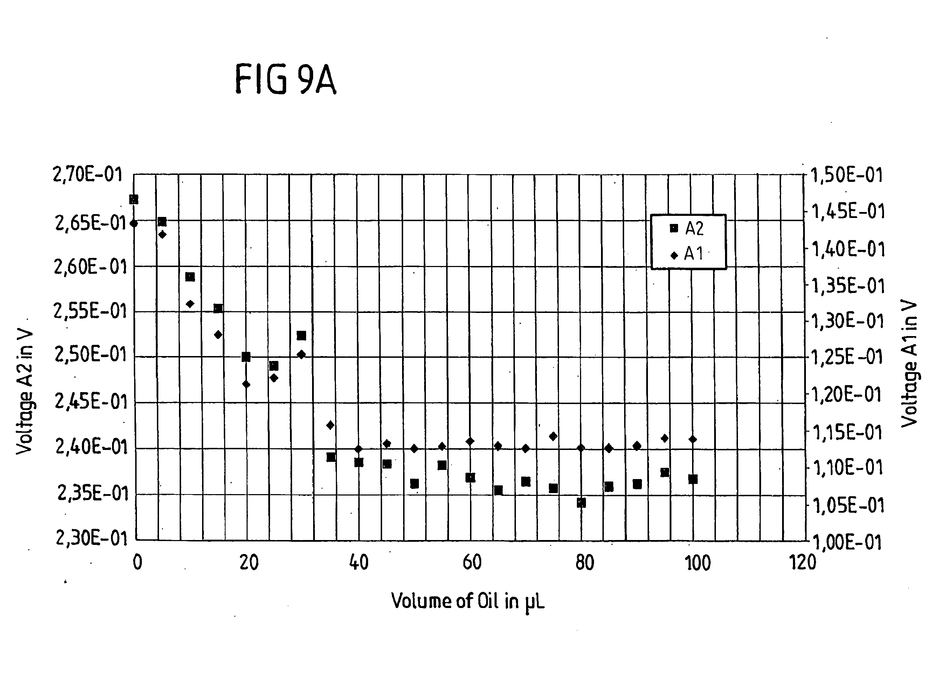

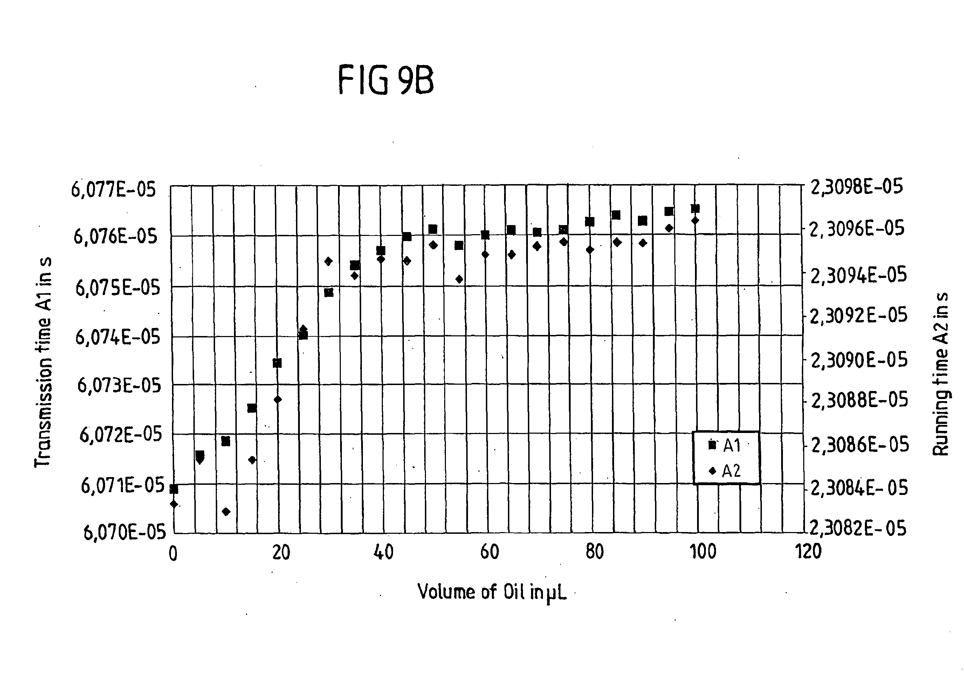

Figures 9A and 9B illustrate average values of the amplitude (Fig. 9A) and the transmission time (Fig. 9B) for the operated bearing (360 revolutions per minute) with respect to different volumes of the lubricant (oil).

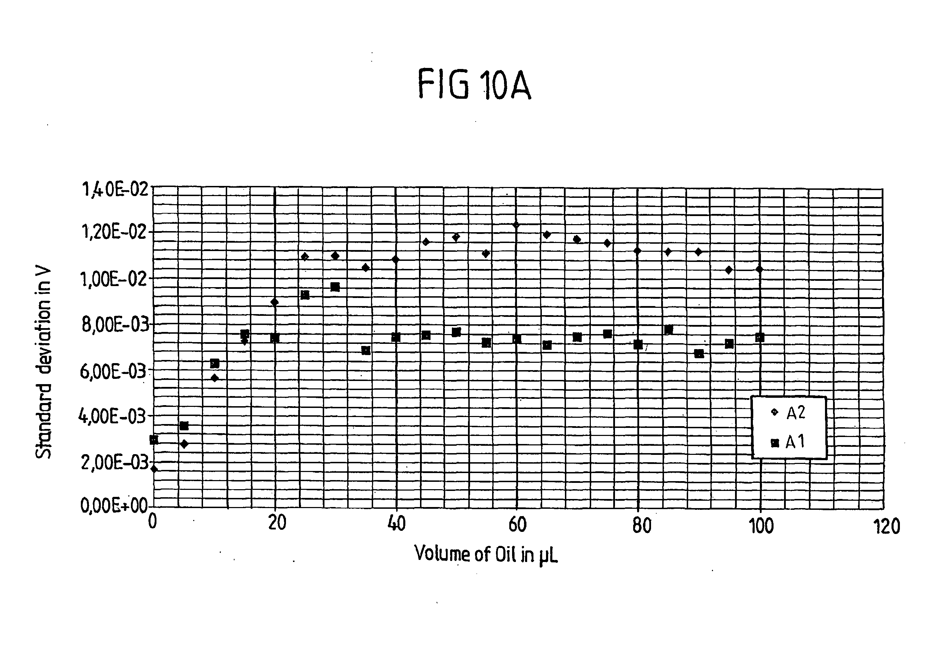

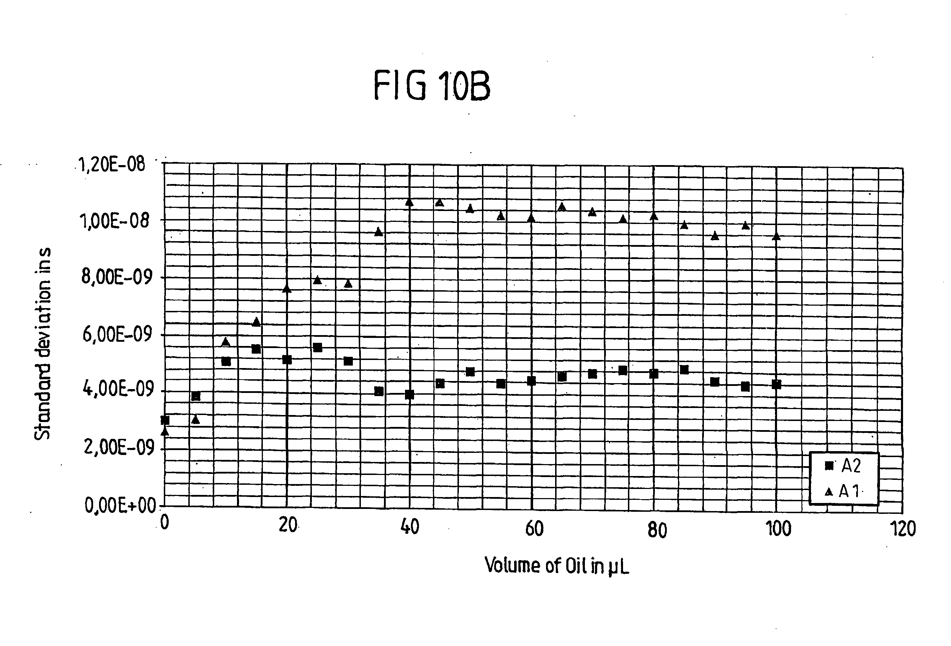

As can be clearly seen both the amplitude and the transmission time (illustrated for the waves A1 in clockwise direction and for the waves A2 in anti-clockwise direction) dependent on the amount of oil present in the bearing. Thus, it is possible - even in the operated state of the bearing - to determine the volume of lubricant in the bearing using the amplitude and/or the transmission time (of the acoustic waves), i.e. the amplitude and the time behaviour of the receiver signal. Figures 10A and 10B show that also the standard deviation of the amplitude (Fig. 10A) and of the transmission time (Fig. 10B) depend on the volume of lubricant present in the bearing.

**Claims**

1. Arrangement for determining properties of a bearing having a first and a second bearing element (11, 13, 17, 12, 14, 18), comprising:

   - at least one transmitter (3) for exciting acoustic waves in the first and/or the second bearing element (11, 13, 17, 12, 14, 18);
   - at least one receiver (4) for receiving acoustic waves evoked by the transmitter (3), wherein properties of the bearing can be determined using a signal generated by the receiver (4) upon receipt of acoustic waves evoked by the transmitter (3);
   - attachment means for detachably attaching the transmitter and the receiver to the first or second bearing element.

2. The arrangement as claimed in claim 1, further comprising evaluating means configured for determining information related to properties of the lubricant (2) using a signal generated by the receiver upon receipt of acoustic waves evoked by the transmitter.

3. The arrangement as claimed in claim 2, wherein the evaluation means are configured to evaluate an amplitude value and a transmission time of the signal.

4. Bearing comprising a first and a second bearing element (11, 13, 17, 12, 14, 18) and an arrangement as claimed in one of the claims 1 to 3, wherein the transmitter and the receiver are detachably connected to the first or second bearing element (11, 13, 17, 12, 14, 18) via the attachment means.

5. Bearing as claimed in claim 4, wherein the bearing is a rolling element bearing such that at least one rolling element (15, 16) is arranged between the first and the second bearing element (13, 17, 14, 18).

6. Method for determining properties of a bearing, the method comprising the steps of:

   a) providing a bearing (1) having a first and a second bearing element (11, 13, 17, 12, 14, 18) that are movable relative to one another;
   b) exciting acoustic waves (A, A1, A2) in the first and/or the second bearing element (11, 13, 17, 12, 14, 18);
   c) arranging at least one receiver (4) and receiving acoustic waves in the first and/or the second bearing element (11, 13, 17, 12, 14, 18) using the receiver, and arranging a transmitter on the first or the second bearing element (11, 13, 17, 12, 14, 18), the transmitter being used for exciting acoustic waves in the first and/or the second bearing element (11, 13, 17, 12, 14, 18);

d) determining information related to properties of the bearing by evaluating a signal generated by the receiver upon receipt of acoustic waves in the first and/or the second bearing element (11, 13, 17, 12, 14, 18), wherein

- the bearing (1) is a rolling element bearing such that a periodic receiver signal is generated when the bearing (1) is operated;
- the periodic receiver signal is registered by the receiver; and
- in step d) the periodic receiver signal is evaluated by determining an average amplitude, an average transmission time of the signal, the standard deviation of the amplitude, the standard deviation of the transmission time or by carrying out a frequency analysis of the receiver signal.

7. The method as claimed in claim 6, wherein in step d) properties of a lubricant of the bearing are determined.

8. The method as claimed in claim 6 or 7, wherein in step d) the signal is evaluated in such a way that defects of the bearing (1), in particular a defect such as a fissure or structural changes in the first or second bearing element, are identified.

9. The method as claimed in one of the claims 6 to 8, wherein in step d) the amount of a lubricant present in the bearing is determined using the determined average amplitude and/or an average transmission time of the signal.

10. The method as claimed in one of the claims 6 to 9, wherein in step d) a velocity of the rolling elements and/or the velocity of a receptacle in which the rolling elements are arranged is determined.

11. The method as claimed in claim 10, wherein an angular velocity $\omega_{cage}$ of the receptacle is calculated according to

$$\omega_{cage} = 2\pi \frac{f_{\text{mod}}}{n_{re}}$$

wherein $f_{\text{mod}}$ is the frequency of the modulation of the receiver signal *and* $n_{re}$ is the number of rolling elements present in the rolling element bearing.

12. The method as claimed in claim 10 or 11, wherein the determined velocity is compared to corresponding velocities measured by a separate velocity detector in order to determine a slip of the bearing.

13. The method as claimed in one of the claims 6 to 12, wherein in step d) the thickness of a lubricant film in the bearing is determined.

14. The method as claimed in claims 14 and 13, wherein in step d) the amount of lubricant present in the bearing is determined, wherein using the determined lubricant amount and the determined velocity the thickness of the lubricant film is determined.

15. The method as claimed in one of the claims 6 to 14, wherein a transmitter is arranged on the first or the second bearing element (11, 13, 17, 12, 14, 18), the transmitter being used for exciting acoustic waves in the first and/or the second bearing element (11, 13, 17, 12, 14, 18), and wherein the transmitter and the receiver are arranged on the same bearing element and a load on this bearing element is determined by evaluating the absolute amplitude of the receiver signal.

**Patentansprüche**

1. Anordnung zum Bestimmen von Eigenschaften eines Lagers mit einem ersten und einem zweiten Lagerelement (11, 13, 17, 12, 14, 18), die Folgendes umfasst:

- mindestens einen Sender (3) zum Anregen von Schallwellen in dem ersten und/oder dem zweiten Lagerelement (11, 13, 17, 12, 14, 18) ;
- mindestens einen Empfänger (4) zum Empfangen von Schallwellen, die durch den Sender (3) hervorgerufen werden, wobei Eigenschaften des Lagers unter Verwendung eines Signals bestimmt werden können, das von dem Empfänger (4) bei Empfang von Schallwellen erzeugt wird, die von dem Sender (3) hervorgerufen werden;
- Befestigungsmittel zum Befestigen des Senders und des Empfängers an dem ersten oder dem zweiten Lagerelement.

2. Anordnung nach Anspruch 1, die ferner Auswertungsmittel umfasst, die dazu ausgelegt sind, Informationen, die sich auf Eigenschaften des Schmiermittels (2) beziehen, unter Verwendung eines Signals zu bestimmen, das von dem Empfänger bei Empfang von Schallwellen erzeugt wird, die von dem Sender hervorgerufen werden.

3. Anordnung nach Anspruch 2, wobei die Auswertungsmittel dazu ausgelegt sind, einen Amplitudenwert und eine Übertragungszeit des Signals auszuwerten.

4. Lager, das ein erstes und ein zweites Lagerelement (11, 13, 17, 12, 14, 18) sowie eine Anordnung nach einem der Ansprüche 1 bis 3 umfasst, wobei der Sender und der Empfänger über die Befestigungsmittel lösbar mit dem ersten oder dem zweiten Lagerelement (11, 13, 17, 12, 14, 18) verbunden sind.

5. Lager nach Anspruch 4, wobei das Lager ein Wälzelementlager ist, derart, dass mindestens ein Wälzelement (15, 16) zwischen dem ersten und dem zweiten Lagerelement (13, 17, 14, 18) angeordnet ist.

6. Verfahren zum Bestimmen von Eigenschaften eines Lagers, wobei das Verfahren die folgenden Schritte umfasst:

a) Bereitstellen eines Lagers (1) mit einem esten und einem zweiten Lagerelement (11, 13, 17, 12, 14, 18), die relativ zueinander beweglich sind;

b) Anregen von Schallwellen (A, A1, A2) in dem ersten und/oder dem zweiten Lagerelement (11, 13, 17, 12, 14, 18) ;

c) Anordnen mindestens eines Empfängers (4), Empfangen der Schallwellen in dem ersten und/oder dem zweiten Lagerelement (11, 13, 17, 12, 14, 18) unter Verwendung des Empfängers und Anordnen eines Senders an dem ersten und/oder dem zweiten Lagerelement (11, 13, 17, 12, 14, 18), wobei der Sender dazu verwendet wird, Schallwellen in dem ersten und/oder dem zweiten Lagerelement (11, 13, 17, 12, 14, 18) anzuregen;

d) Bestimmen von Informationen, die sich auf Eigenschaften des Lagers beziehen, durch Auswerten eines Signals, das von dem Empfänger bei Empfang von Schallwellen in dem ersten und/oder dem zweiten Lagerelement (11, 13, 17, 12, 14, 18) erzeugt wird, wobei

- das Lager (1) ein Wälzelementlager ist; so dass ein periodisches Empfängersignal erzeugt wird, wenn das Lager (1) betrieben wird;
- das periodische Empfängersignal durch den Empfänger registriert wird; und
- in Schritt d) das periodische Empfängersignal durch Bestimmen einer durchschnittlichen Amplitude, einer durchschnittlichen Übertragungszeit des Signals, der Standardabweichung der Amplitude, der Standardabweichung der Übertragungszeit oder durch Ausführen einer Frequenzanalyse des Empfängersignals ausgewertet wird.

7. Verfahren nach Anspruch 6, wobei in Schritt d) Eigenschaften eines Schmiermittels des Lagers bestimmt werden.

8. Verfahren nach Anspruch 6 oder 7, wobei in Schritt d) das Signal derart ausgewertet wird, dass Defekte des Lagers (1), insbesondere ein Defekt wie ein Riss oder wie strukturelle Änderungen in dem ersten oder dem zweiten Lagerelement, identifiziert werden.

9. Verfahren nach einem der Ansprüche 6 bis 8, wobei in Schritt d) die Menge des in dem Lager vorhandenen Schmiermittels unter Verwendung der bestimmten durchschnittlichen Amplitude und/oder einer durchschnittlichen Übertragungszeit des Signals bestimmt wird.

10. Verfahren nach einem der Ansprüche 6 bis 9, wobei in Schritt d) eine Geschwindigkeit der Wälzelemente und/oder die Geschwindigkeit eines Aufnahmeelements, in dem die Wälzelemente angeordnet sind, bestimmt werden.

11. Verfahren nach Anspruch 10, wobei eine Winkelgeschwindigkeit $\omega_{cage}$ des Aufnahmeelements gemäß der folgenden Gleichung berechnet wird:

$$\omega_{cage} = 2\pi \frac{f_{mod}}{n_{re}}$$

wobei $f_{mod}$ die Frequenz der Modulation des Empfängersignals ist und $n_{re}$ die Anzahl der in dem Wälzelementlager vorhandenen Wälzelemente ist.

12. Verfahren nach Anspruch 10 oder 11, wobei die bestimmte Geschwindigkeit mit entsprechenden Geschwindigkeiten, die von einem separaten Geschwindigkeitsdetektor gemessen werden, verglichen wird, um einen Schlupf des Lagers zu bestimmen.

13. Verfahren nach einem der Ansprüche 6 bis 12, wobei in Schritt d) die Dicke eines Schmiermittelfilms in dem Lager bestimmt wird.

14. Verfahren nach den Ansprüchen 14 und 13, wobei in Schritt d) die Menge des im Lager vorhandenen Schmiermittels bestimmt wird, wobei unter Verwendung der bestimmten Schmiermittelmenge und der bestimmten Geschwindigkeit die Dicke des Schmiermittelfilms bestimmt wird.

15. Verfahren nach einem der Ansprüche 6 bis 14, wobei ein Sender an dem ersten oder dem zweiten Lagerelement (11, 13, 17, 12, 14, 18) angeordnet ist und der Sender zum Anregen von Schallwellen in dem ersten und/oder dem zweiten Lagerelement (11, 13, 17, 12, 14, 18) verwendet wird, und wobei der Sender und der Empfänger an dem gleichen Lagerelement angeordnet sind und eine Last auf diesem Lagerelement durch Auswerten der absoluten Amplitude des Empfängersignals bestimmt wird.

## Revendications

1. Dispositif pour déterminer les propriétés d'un palier ayant un premier et un deuxième élément de palier (11, 13, 17, 12, 14, 18), comprenant :

   - au moins un émetteur (3) pour exciter des ondes acoustiques dans le premier et/ou le deuxième élément de palier (11, 13, 17, 12, 14, 18) ;
   - au moins un récepteur (4) pour recevoir des ondes acoustiques évoquées par l'émetteur (3), dans lequel on peut déterminer les propriétés du palier en utilisant un signal généré par le récepteur (4) lors de la réception des ondes acoustiques évoquées par l'émetteur (3) ;
   - un moyen de fixation pour attacher de manière détachable l'émetteur et le récepteur au premier ou au deuxième élément de palier.

2. Dispositif selon la revendication 1, comprenant en outre un moyen d'évaluation configuré pour déterminer des informations liées aux propriétés du lubrifiant (2) en utilisant un signal généré par le récepteur lors de la réception des ondes acoustiques évoquées par l'émetteur.

3. Dispositif selon la revendication 2, dans lequel le moyen d'évaluation est configuré de façon à évaluer une valeur d'amplitude et un temps de transmission du signal.

4. Palier comprenant un premier et un deuxième élément de palier (11, 13, 17, 12, 14, 18) et un dispositif selon un des revendications 1 à 3, dans lequel l'émetteur et le récepteur sont raccordés de manière détachable au premier ou au deuxième élément de palier (11, 13, 17, 12, 14, 18) via le moyen de fixation.

5. Palier selon la revendication 4, ce palier étant un palier à éléments roulants tel qu'au moins un élément roulant (15, 16) est disposé entre le premier et le deuxième élément de palier (13, 17, 14, 18).

6. Procédé pour déterminer les propriétés d'un palier, ce procédé comprenant les étapes consistant à :

   a) fournir un palier (1) ayant un premier et un deuxième élément de palier (11, 13, 17, 12, 14, 18) qui sont mobiles l'un par rapport à l'autre ;
   b) exciter des ondes acoustiques (A, A1, A2) dans le premier et/ou le deuxième élément de palier (11, 13, 17, 12, 14, 18) ;
   c) disposer au moins un récepteur (4) et à recevoir des ondes acoustiques dans le premier et/ou le deuxième élément de palier (11, 13, 17, 12, 14, 18) en utilisant le récepteur et à disposer un émetteur sur le premier ou le deuxième élément de palier (11, 13, 17, 12, 14, 18), cet émetteur étant utilisé pour exciter des ondes acoustiques dans le premier et/ou le deuxième élément de palier (11, 13, 17, 12, 14, 18) ;
   d) déterminer des informations liées aux propriétés du palier en évaluant un signal généré par le récepteur lors de la réception d'ondes acoustiques dans le premier et/ou le deuxième élément de palier (11, 13, 17, 12, 14, 18), dans lequel

   - le palier (1) est un palier à éléments roulants tel qu'un signal de récepteur périodique est généré lorsque le palier (1) est utilisé ;
   - le signal de récepteur périodique est enregistré par le récepteur ; et
   - lors de l'étape d), le signal de récepteur périodique est évalué en déterminant une amplitude moyenne, un temps de transmission moyen du signal, l'écart type de l'amplitude, l'écart type du temps de transmission ou en effectuant une analyse de fréquence du signal du récepteur.

7. Procédé selon la revendication 6, dans lequel, lors de l'étape d), les propriétés d'un lubrifiant du palier sont déterminées.

8. Procédé selon la revendication 6 ou 7, dans lequel, lors de l'étape d), le signal est évalué de manière à ce que des défauts du palier (1), en particulier un défaut tel qu'une fissure ou des changements structurels dans le premier ou le deuxième élément de palier, sont identifiés.

9. Procédé selon une des revendications 6 à 8, dans lequel, lors de l'étape d), la quantité d'un lubrifiant présent dans le palier est déterminée en utilisant l'amplitude moyenne déterminée et/ou un temps de transmission moyen du signal.

10. Procédé selon une des revendications 6 à 9, dans lequel, lors de l'étape d), une vitesse des éléments roulants et/ou la vitesse d'un récipient dans lequel les éléments roulants sont disposés sont déterminées.

11. Procédé selon la revendication 10, dans lequel une vitesse angulaire $\omega_{cage}$ du récipient est calculée selon l'équation

$$\omega_{cage} = 2\pi \frac{f_{mod}}{n_{re}}$$

dans laquelle $f_{mod}$ est la fréquence de la modulation du signal du récepteur et $n_{re}$ est le nombre d'éléments roulants présents dans le palier à éléments roulants.

12. Procédé selon la revendication 10 ou 11, dans lequel la vitesse déterminée est comparée à des vitesses correspondantes mesurées par un détecteur de vitesse séparé afin de déterminer un glissement du palier.

13. Procédé selon une des revendications 6 à 12, dans lequel, lors de l'étape d), l'épaisseur d'un film lubrifiant dans le palier est déterminée.

14. Procédé selon les revendications 14 et 13, dans lequel, lors de l'étape d), la quantité de lubrifiant présente dans le palier est déterminée, dans lequel, en utilisant la quantité de lubrifiant déterminée et la vitesse déterminée, l'épaisseur du film lubrifiant est déterminée.

15. Procédé selon une des revendications 6 à 14, dans lequel un émetteur est disposé sur le premier ou le deuxième élément de palier (11, 13, 17, 12, 14, 18), cet émetteur étant utilisé pour exciter des ondes acoustiques dans le premier et/ou le deuxième élément de palier (11, 13, 17, 12, 14, 18), et dans lequel l'émetteur et le récepteur sont disposés sur le même élément de palier et une charge sur cet élément de palier est déterminée en évaluant l'amplitude absolue du signal du récepteur.

# FIG 1

## FIG 2A

## FIG 2B

EP 2 616 791 B1

FIG 3A

FIG 3B

EP 2 616 791 B1

16

FIG 4

14

15

13

3

B    A1

2

4

1

FIG 5A

A1

17

3

4

A2

1

FIG 5B

181    B    18

19

16

171    A    17

172

# FIG 6

## FIG 7A

## FIG 7B

## FIG 8A

## FIG 8B

FIG 9A

# FIG 9B

Running time A2 in s

Transmission time A1 in s

Volume of Oil in µL

A1
A2

## FIG 10A

# FIG 10B

EP 2 616 791 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1598569 A

**Non-patent literature cited in the description**

- Rolling Bearing Analysis. John Wiley & Sons Canada, Ltd, 15 December 2000